# EUROPÄISCHE PATENTSCHRIFT

(11) **EP 0 624 456 B1**
(45) Veröffentlichungstag und Bekanntmachung des Hinweises auf die Patenterteilung: **11.08.1999**
(21) Anmeldenummer: 94106629.2
(22) Anmeldetag: 28.04.1994
(51) Int. Cl.: B29D 30/32, B29D 30/48

(54) **Handhabungsvorrichtung für Reifendrahtkerne**
Handling device for tire beads
Dispositif de manipulation pour tringles de talon de pneu

(30) Priorität: 13.05.1993 DE 4316071
(43) Veröffentlichungstag der Anmeldung: 17.11.1994
(73) Patentinhaber: Krupp Kunststofftechnik GmbH, 45143 Essen (DE)
(72) Erfinder: Dreyer, Hans, Dipl.-Ing., D-21077 Hamburg (DE); Kaczorowski, Richard, Dipl.-Ing., D-20099 Hamburg (DE)
(74) Vertreter: John, Ernst, Dipl.-Ing.

(56) Entgegenhaltungen:
- FR-A- 1 223 553
- FR-A- 1 413 916
- US-A- 3 849 231
- US-A- 3 895 986
- US-A- 5 100 497

## Beschreibung

Die Erfindung betrifft eine Vorrichtung für das Aufnehmen und Befördern von Reifendrahtkernen sowie für die Übergabe der Reifendrahtkerne an die Magnetscheibe der Kernsetzvorrichtung einer Reifenaufbaumaschine bei der Reifenrohlingsfertigung während des automatischen Rohlingsaufbaus.

Da Reifenaufbaumaschinen mit Reifendrahtkernen unterschiedlicher Größe - sogenannte Zollgröße - beschickt werden, benötigen die bekannten Reifenaufbaumaschinen jeder einzelnen Zollgröße zugeordnete Wechselteile. Dies erfordert die Bereithaltung einer Vielzahl von Wechselteilen. Darüber hinaus erfordert die Umrüstung auf eine andere Zollgröße einen erheblichen Arbeitsaufwand.

Durch die US-A 3,849,231 ist eine Vorrichtung der gattungsgemäßen Art bekannt. Die Vorrichtung umfaßt auch die Schwenkarme, die zwischen einer undrehbaren Scheibe und einer konzentrisch dazu angeordneten drehbaren Scheibe angeordnet sind. Die Schwenkarme sind um an der undrehbaren Scheibe befestigten Bolzen schwenkbar angeordnet. Die drehbare Scheibe ist hierbei mit der Kolbenstange eines Druckluftzylinders gelenkig verbunden und das Schwenken der Schwenkarme wird durch Verdrehen der drehbaren Scheibe bewirkt. Nachteilig ist auch hier festzustellen, daß für unterschiedliche Reifengrößen bei erhöhtem Zeit- und Arbeitsaufwand eine Vielzahl von Wechselteilen bereitgehalten werden muß.

Der Erfindung liegt die Aufgabe zugrunde, die eingangs erwähnte Vorrichtung für das Aufnehmen und das Befördern von Reifendrahtkernen sowie für die Übergabe der Reifendrahtkerne so auszubilden, daß sie für verschiedene Zollgrößen verwendet werden kann, so daß die Kosten für die Wechselteile entfallen und der Arbeitsaufwand bei der Umrüstung auf eine andere Zollgröße verringert wird.

Diese Aufgabe wird einerseits durch die im Kennzeichen des ersten Patentanspruchs und andererseits durch die im Kennzeichen des nebengeordneten zweiten Patentanspruchs angegebenen Merkmale gelöst. Vorteilhafte Weiterbildungen des Erfindungsgegenstandes sind den Unteransprüchen zu entnehmen.

Die Vorrichtung ist mit Schwenkarmen versehen, die mittels eines Druckluftzylinders nach innen und nach außen geschwenkt werden können und die beim Schwenken nach außen - also beim Spreizen - ein Spannen und Zentrieren der Reifendrahtkerne bewirken. Die Verbindung zwischen den Schwenkarmen und dem Druckluftzylinder bildende Anlenkpunkt ist verstellbar ausgebildet.

Die Verstellbarkeit des Anlenkpunktes ermöglicht eine stufenlose Verstellung der Ausschwenkwege der Schwenkarme, so daß die erfindungsgemäße Vorrichtung bei unterschiedlichen Zollgrößen, beispielsweise bei Zollgrößen von 12 bis 17 - erforderlichenfalls auch darüber hinaus - verwendet werden. Ferner kann dadurch auch das Toleranzfeld der Reifendrahtkerne ausgeglichen werden. Somit ist die Bereithaltung von Wechselteilen nicht mehr erforderlich, und für die Umrüstung sind nur noch wenige Handgriffe notwendig.

In Ausgestaltung der Erfindung sind die Schwenkarme zwischen einer mit der Vorrichtung undrehbar verbundenen Scheibe und einer konzentrisch dazu angeordneten drehbaren Scheibe angeordnet, wobei die drehbare Scheibe mit der Kolbenstange des Druckluftzylinders gelenkig verbunden ist und wobei das Schwenken der Schwenkarme durch Verdrehen der drehbaren Scheibe bewirkt wird.

In weiterer Ausgestaltung der Erfindung ist zwischen der Kolbenstange des Druckluftzylinders und der drehbaren Scheibe ein Schnellspannhebel vorgesehen. Durch einfaches Versetzen des Schnellspannhebels wird eine sehr weitgehende Verstellung innerhalb des Arbeitsbereiches der unterschiedlichen Zollgrößen der Reifendrahtkerne ermöglicht. Der Schnellspannhebel ist dabei mit seinem der Kolbenstange des Druckluftzylinders abgewandten Ende unmittelbar an der drehbaren Scheibe befestigt; es kann aber auch zwischen der Kolbenstange des Druckluftzylinders und der drehbaren Scheibe eine Verstellstange vorgesehen sein.

Nach einem anderen Merkmal der Erfindung weist die drehbare Scheibe eine konzentrisch angeordnete Längsnut auf, durch die ein Befestigungsbolzen hindurchgeführt ist, der die Kolbenstange des Druckluftzylinders mit der drehbaren Scheibe verbindet. In diesem Falle erfolgt die Verstellung innerhalb des Arbeitsbereiches der unterschiedlichen Zollgrößen der Reifendrahtkerne durch ein Versetzen des Befestigungsbolzens innerhalb der in der drehbaren Scheibe vorgesehenen Längsnut.

Bei einer bevorzugten Ausführungsform der erfindungsgemäßen Vorrichtung sind auf der rechten und auf der linken Seite der Vorrichtung je ein Druckluftzylinder und Schwenkarme vorgesehen. Hierdurch wird eine besonders rationelle Arbeitsweise der erfindungsgemäßen Vorrichtung ermöglicht.

Zweckmäßigerweise ist an den Schwenkarmen je eine drehbare Rolle angebracht, die zur Aufnahme der Reifendrahtkerne dient.

Die erfindungsgemäße Vorrichtung kann noch dadurch verbessert werden, daß die Schwenkarme um an der undrehbaren Scheibe befestigte Bolzen schwenkbar und mit einer mittig angeordneten Längsnut versehen sind, wobei in die Längsnut ein weiterer Bolzen eingreift, der an der drehbaren Scheibe befestigt ist. Dadurch ergibt sich eine einwandfreie Zwangsführung der Schwenkarme.

Die Erfindung ist anhand der Zeichnung, in der Ausführungsbeispiele der Erfindung schematisch dargestellt sind, näher erläutert. Es zeigen:
- Fig. 1: eine Vorrichtung für das Aufnehmen und das Befördern sowie für die Übergabe von Reifendrahtkernen in Vorderansicht, teilweise in einem Schnitt nach der Linie I-I in Fig. 2;
- Fig. 2: die Vorrichtung gemäß Fig. 1 in Seitenansicht, von rechts gesehen;
- Fig. 3: einen Schnitt nach der Linie III-III in Fig. 2;
- Fig. 4: eine andere Vorrichtung für das Aufnehmen und das Befördern sowie für die Übergabe von Reifendrahtkernen in Seitenansicht, ebenfalls von rechts gesehen.

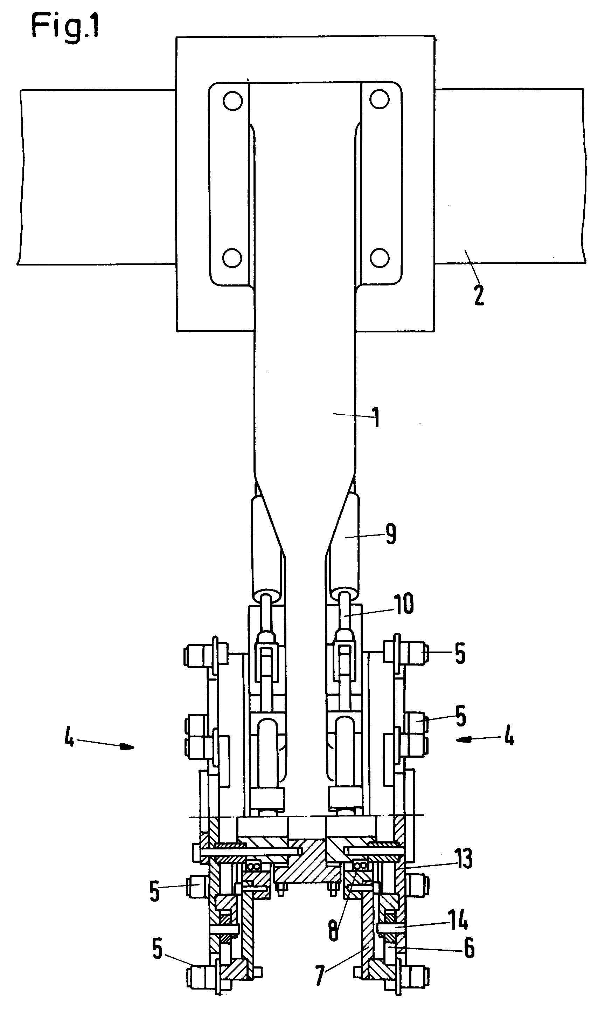

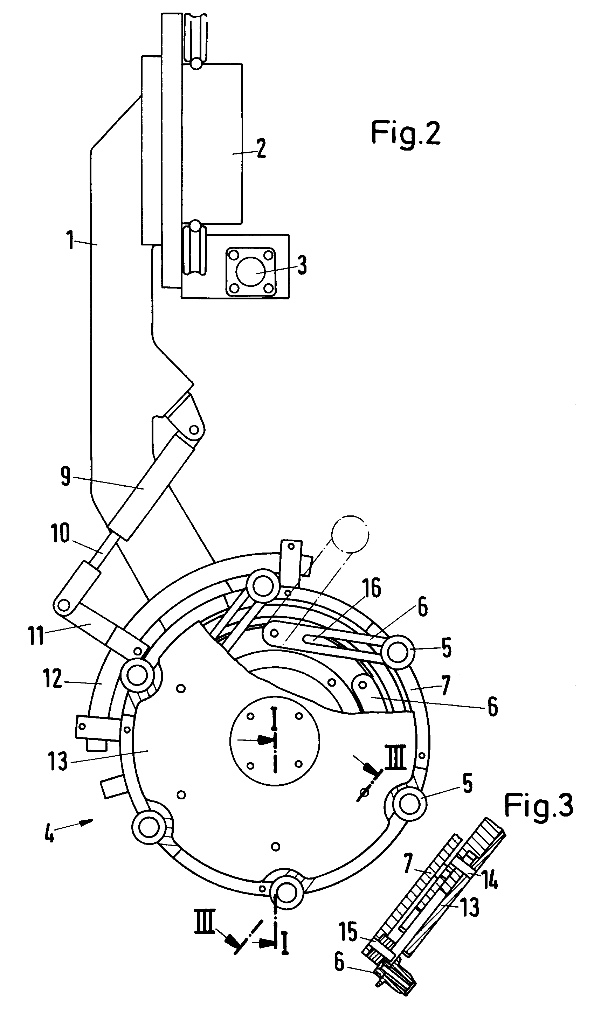

Die in den Fig. 1 bis 3 dargestellte Vorrichtung ist von der Bedienungsseite der Reifenaufbaumaschinen aus gesehen vorn an dem - nicht dargestellten - Transferwagen der Reifenaufbaumaschine angebracht; sie weist einen Träger 1 auf, der an einem Linearschlitten 2 mit Schrauben befestigt ist. Mittels Druckluftzylinder 3 kann der Träger 1 nach links und rechts verfahren und in die Übergabepositionen gebracht werden. An dem Träger 1 ist - auf der rechten und auf der linken Seite - je ein stufenlos verstellbares, konzentrisch spannendes und zwangsgeführtes Rollensystem 4 angebracht, dessen Rollen 5 zur Aufnahme der - nicht dargestellten - Reifendrahtkerne dienen. Jedes Rollensystem 4 ist mit Schwenkarmen 6 und mit einer konzentrisch angeordneten drehbaren Scheibe 7 versehen, wobei die Scheibe 7 in Kugellagern 8 ruht.

An dem Träger 1 ist beidseitig je ein Druckluftzylinder 9 angelenkt, dessen Kolbenstange 10 über einen Schnellspannhebel 11 und einer an der drehbaren Scheibe 7 angebrachten Verstellstange 12 an der drehbaren Scheibe 7 angelenkt ist. Beim Ein- und Ausfahren des Druckluftzylinders 9 wird die drehbare Scheibe 7 gedreht. Dabei werden beim Ausfahren des Druckluftzylinders 9 die Schwenkarme 6 infolge einer Zwangsführung nach außen gespreizt, während beim Einfahren des Druckluftzylinders 9 die Schwenkarme 6 sich wieder nach innen legen. Beim Spreizen der Schwenkarme 6 werden die Reifendrahtkerne gespannt und zentriert.

Die Zwangsführung der Schwenkarme 6 ergibt sich dadurch, daß an einer mit dem Träger 1 fest verbundenen Scheibe 13 Bolzen 14 befestigt sind, die einen festen Drehpunkt für die Schwenkarme 6 bilden, während an der drehbaren Scheibe 7 weitere Bolzen 15 befestigt sind und die Schwenkarme 6 jeweils eine mittig angeordnete Längsnut 16 aufweisen, in die jeweils ein Bolzen 15 mit Spiel eingreift. Dadurch gleiten beim Drehen der drehbaren Scheibe 7 die Bolzen 15 durch die Längsnuten 16 der Schwenkarme 6 und schwenken diese nach außen bzw. nach innen, je nachdem, ob die Druckluftzylinder 9 aus- oder einfahren.

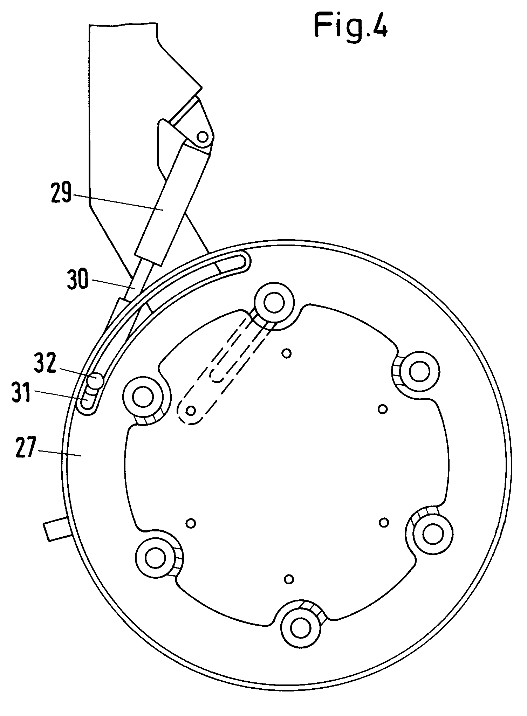

Bei dem in Fig. 4 dargestellten Ausführungsbeispiel weist die drehbare Scheibe 27 eine konzentrisch angeordnete Längsnut 31 auf, durch die ein Befestigungsbolzen 32 hindurchgeführt ist. Der Befestigungsbolzen 32 verbindet die Kolbenstange 30 des Druckluftzylinder 29 mit der drehbaren Scheibe 27.

Das Arbeitsprinzip der erfindungsgemäßen Vorrichtung ist nachstehend wiedergegeben.

Während sich die Vorrichtung in der mittleren Warteposition befindet, werden die Reifendrahtkerne auf die entspannten Rollen 5 der linken und der rechten Seite der Vorrichtung aufgelegt. Dann werden die Druckluftzylinder 9 ausgefahren, so daß die Schwenkarme 6 nach außen gespreizt und dadurch die Reifendrahtkerne konzentrisch gespannt und zentriert werden. Danach wird die gesamte Vorrichtung seitwärts verfahren, beispielsweise in die linke Übergabeposition, wo sich die - nicht dargestellte - Magnetscheibe einer Kernsetzvorrichtung befindet. Durch die Magnetkraft wird der Reifendrahtkern von der Magnetscheibe übernommen und in seiner Position gehalten. Gleichzeitig werden die frei gewordenen Rollen 5 der linken Seite der Vorrichtung entspannt. Sodann wird die Vorrichtung in die rechte Übergabeposition verfahren, wo sich ebenfalls die Magnetscheibe einer Kernsetzvorrichtung befindet und wo sich der vorstehend beschriebene Vorgang entsprechend wiederholt. Schließlich fährt die Vorrichtung in ihre Ausgangsposition - die mittlere Warteposition - zurück, wo die Rollen 5 erneut mit Reifendrahtkernen beschickt werden.

Das Spannen und Zentrieren der Reifendrahtkerne erfolgt je nach deren Art in unterschiedliche Weise.

Bei sogenannten leichten Kernen, d. h. bei Reifendrahtkernen, die nicht gummiert sind und keine Kernfahne o. dgl. aufweisen und die mit sehr engen Fertigungstoleranzen hergestellt worden sind, erfolgt das Spannen gegen einen Anschlag, wobei die Druckluftzylinder 9 in die Endlage fahren. Hierbei sind die Rollen 5 auf die Zollgröße der Reifendrahtkerne eingestellt.

Bei Kernen in schwerer Ausführung, d. h. bei Reifendrahtkernen mit hohem Kernreiter, mit einem Flipper oder einem Wulstschutzband sowie bei Reifendrahtkernen mit sehr großen Durchmesserabweichungen bzw. einem großen Toleranzfeld erfolgt das Spannen mittels des regelbaren Drucks in den Druckluftzylindern 9 gegen den Gegendruck der Reifendrahtkerne.

## Patentansprüche

1. Vorrichtung für das Aufnehmen und das Befördern von Reifendrahtkernen sowie für die Übergabe der Reifendrahtkerne an die Magnetscheibe der Kernsetzvorrichtung einer Reifenaufbaumaschine bei der Reifenrohlingsfertigung während des automatischen Rohlingsaufbaus, die mit Schwenkarmen (6) versehen ist, die mittels eines Druckluftzylinders (9) nach innen und nach außen geschwenkt werden können und beim Schwenken nach außen - also beim Spreizen - ein Spannen und Zentrieren der Reifendrahtkerne bewirken, und bei der die Verbindung zwischen den Schwenkarmen (6) und dem Druckluftzylinder (9) verstellbar ausgebildet ist, die Schwenkarme (6) zwischen einer mit der Vorrichtung undrehbar verbundenen Scheibe (13) und einer konzentrisch dazu angeordneten drehbaren Scheibe (7) angeordnet sind, die drehbare Scheibe (7) mit der Kolbenstange (10) des Druckluftzylinders (9) gelenkig verbunden ist und das Schwenken der Schwenkarme (6) durch Verdrehen der drehbaren Scheibe (7) bewirkt wird, wobei die Schwenkarme (6) um an der undrehbaren Scheibe (13) befestigte Bolzen (14) schwenkbar sind,
**dadurch gekennzeichnet,**
daß in den Schwenkarmen (6) eine Längsnut (16) mittig angeordnet ist, in welche ein weiterer Bolzen (15), der an der drehbaren Scheibe (7) befestigt ist, eingreift, und daß die Kolbenstange (10) des Druckluftzylinders (9) über einen Schnellspannhebel (11) und eine an der drehbaren Scheibe (7) angebrachte Verstellstange (12) an der drehbaren Scheibe (7) angelenkt ist.

2. Vorrichtung für das Aufnehmen und das Befördern von Reifendrahtkernen sowie für die Übergabe der Reifendrahtkerne an die Magnetscheibe der Kernsetzvorrichtung einer Reifenaufbaumaschine bei der Reifenrohlingsfertigung während des automatischen Rohlingsaufbaus, die mit Schwenkarmen (6) versehen ist, die mittels eines Druckluftzylinders (9) nach innen und nach außen geschwenkt werden können und beim Schwenken nach außen - also beim Spreizen - ein Spannen und Zentrieren der Reifendrahtkerne bewirken, und bei der die Verbindung zwischen den Schwenkarmen (6) und dem Druckluftzylinder (9) verstellbar ausgebildet ist, die Schwenkarme (6) zwischen einer mit der Vorrichtung undrehbar verbundenen Scheibe (13) und einer konzentrisch dazu angeordneten drehbaren Scheibe (7) angeordnet sind, die drehbare Scheibe (7) mit der Kolbenstange (10) des Druckluftzylinders (9) gelenkig verbunden ist und das Schwenken der Schwenkarme (6) durch Verdrehen der drehbaren Scheibe (7) bewirkt wird, wobei die Schwenkarme (6) um an der undrehbaren Scheibe (13) befestigte Bolzen (14) schwenkbar sind,
**dadurch gekennzeichnet,**
daß in den Schwenkarmen (6) eine Längsnut (16) mittig angeordnet ist, in welche ein weiterer Bolzen (15), der an der drehbaren Scheibe (7) befestigt ist, eingreift, und daß die drehbare Scheibe (27) eine konzentrisch angeordnete Längsnut (31) aufweist, durch die ein Befestigungsbolzen (32) hindurchgeführt ist, der die Kolbenstange (30) des Druckluftzylinders (29) mit der drehbaren Scheibe (27) verbindet.

3. Vorrichtung nach Anspruch 1 oder 2,
**dadurch gekennzeichnet,**
daß auf der rechten und auf der linken Seite der Vorrichtung je ein Druckluftzylinder (9, 29) und Schwenkarme (6) vorgesehen sind.

4. Vorrichtung nach einem der Ansprüche 1 bis 3,
**dadurch gekennzeichnet,**
daß an den Schwenkarmen (6) je eine drehbare Rolle (5) angebracht ist, die zur Aufnahme der Reifendrahtkerne dient.

## Claims

1. Device for receiving and conveying tire beads and tor transterring the tire beads to the magnetic disc of the core-setting device of a tire-assembling machine in the production of the tire blanks during the automatic assembly of the blanks, the said device being provided with pivot arms (6) which can be pivoted inwards and outwards by means of a pneumatic cylinder (9) and which when pivoting outwards - that is to say when spreading - effect a gripping and centring of the tire beads, wherein the connection between the pivot arms (6) and the pneumatic cylinder (9) is adjustable, the pivot arms (6) are disposed between a disc (13) which is non-rotatably connected to the device and a rotatable disc (7) disposed concentrically therewith, the rotatable disc (7) is connected in an articulated manner to the piston rod (10) of the pneumatic cylinder (9) and the pivoting of the pivot arms (6) is effected by rotation of the rotatable disc (7) the pivot arms (6) being pivotable about bolts (14) fixed on the non-rotatable disc (13), characterised in that a longitudinal slot (16) is disposed centrally in the pivot arms (6) and in this slot a further bolt (15) engages which is fixed on the rotatable disc (7), and that the piston rod (10) of the pneumatic cylinder (9) is articulated on the rotatable disc (7) by way of a quick-acting lever (11) and an adjusting bar (12) attached to the rotatable disc (7).

2. Device for receiving and conveying tire beads and for transferring the tire beads to the magnetic disc of the core-setting device of a tire-assembling machine in the production of the tire blanks during the automatic assembly of the blanks, the said device being provided with pivot arms (6) which can be pivoted inwards and outwards by means of a pneumatic cylinder (9) and which when pivoting outwards - that is to say when spreading - effect a gripping and centring of the tire beads, wherein the connection between the pivot arms (6) and the pneumatic cylinder (9) is adjustable, the pivot arms (6) are disposed between a disc (13) which is non-rotatably connected to the device and a rotatable disc (7) disposed concentrically therewith the rotatable disc (7) is connected in an articulated manner to the piston rod (10) of the pneumatic cylinder (9) and the pivoting of the pivot arms (6) is effected by rotation of the rotatable disc (7), the pivot arms (6) being pivotable about bolts (14) fixed on the non-rotatable disc (13), characterised in that a longitudinal slot (16) is disposed centrally in the pivot arms (6) and in this slot a further bolt (15) engages which is fixed on the rotatable disc (7), and that the rotatable disc (27) has a concentrically disposed longitudinal slot (31) through which is passed a fixing bolt (32) which connects the piston rod (30) of the pneumatic cylinder (29) to the rotatable disc (27).

3. Device as claimed in Claim 1 or 2, characterised in that a pneumatic cylinder (9, 29) and pivot arms (6) are provided in each case on the right-hand side and on the left-hand side of the device.

4. Device as claimed in one of claims 1 to 3, characterised in that a rotatable roller (5) which serves to receive the tire beads is attached to each of the pivot arms (6).

## Revendications

1. Dispositif pour la préhension et le transport de noyaux en fil de bandages ainsi que pour la transmission des noyaux en fil de bandages au disque magnétique du dispositif de placement de noyaux d'une machine de construction de bandages lors de la fabrication de l'ébauche de bandage pendant la construction automatique de l'ébauche, qui est pourvu de bras pivotants (6) qui peuvent être pivotés par un cylindre à air comprimé (9) vers l'intérieur et vers l'extérieur et qui provoquent lors du pivotement vers l'extérieur, donc lors de l'écartement, une tension et un centrage des noyaux en fil de bandages et où la liaison entre les bras pivotants (6) et le cylindre à air comprimé (9) est réalisée d'une manière ajustable, les bras pivotants sont disposés entre un disque (13) relié d'une manière immobile en rotation au dispositif et un disque (7) tournant concentriquement à celui-ci, le disque tournant (7) est relié d'une manière articulée à la tige de piston (10) du cylindre à air comprimé (9), et le pivotement des bras pivotants (6) est provoqué par une rotation du disque tournant (7), où les bras pivotants (6) peuvent pivoter autour de boulons (14) fixés au disque non tournant (13),
caractérisé en ce
qu'il est ménagé dans les bras pivotants (6) au milieu une rainure longitudinale (16) dans laquelle s'engage un boulon supplémentaire (15) qui est fixé au disque tournant (7), et en ce que la tige de piston (10) du cylindre à air comprimé (9) est articulée par un levier de serrage rapide (11) et une tige d'ajustement (12), fixée au disque tournant (7), au disque tournant (7).

2. Dispositif pour la préhension et le transport de noyaux en fil de bandages ainsi que pour la transmission des noyaux en fil de bandages au disque magnétique du dispositif de placement de noyaux d'une machine de construction de bandage lors de la fabrication de l'ébauche de bandage pendant la construction automatique de l'ébauche, qui est pourvu de bras pivotants (6) qui peuvent être pivotés par un cylindre à air comprimé (9) vers l'intérieur et vers l'extérieur et qui provoquent lors du pivotement vers l'extérieur, donc lors de l'écartement, une tension et un centrage des noyaux en fil de bandages, et où la liaison entre les bras pivotants (6) et le cylindre à air comprimé (9) est réalisée d'une manière ajustable, les bras pivotants (6) sont disposés entre un disque (13) relié de manière immobile en rotation au dispositif et un disque tournant (7) disposé concentriquement à celui-ci, le disque tournant (7) est relié d'une manière articulée à la tige de piston (10) du cylindre à air comprimé (9) et le pivotement des bras pivotants (6) est provoqué par une rotation du disque tournant (7), où les bras pivotants (6) peuvent être pivotés autour de boulons (14) fixés au disque non tournant (13),
caractérisé en ce
qu'il est ménagé dans les bras pivotants (6) au milieu une rainure longitudinale (16) dans laquelle s'engage un boulon supplémentaire (15) qui est fixé au disque tournant (7), et en ce que le disque tournant (27) présente une rainure longitudinale (31) disposée concentriquement, à travers laquelle a été guidé un boulon de fixation (32) qui relie la tige de piston (30) du cylindre à air comprimé (29) au disque tournant (27).

3. Dispositif selon la revendication 1 ou 2,
caractérisé en ce
que sont prévus sur le côté droit et sur le côté gauche du dispositif respectivement un cylindre à air comprimé (9, 29) et des bras pivotants (6).

4. Dispositif selon l'une des revendications 1 à 3,
caractérisé en ce
qu'il est fixé aux bras pivotants (6) respectivement un rouleau tournant (5) qui sert à la préhension des noyaux en fil de bandages.
